## Europäisches Patentamt

## European Patent Office

## Office européen des brevets

(11) Numéro de publication: **0 272 995**
**A1**

(12) **DEMANDE DE BREVET EUROPEEN**

(21) Numéro de dépôt: **87420343.3**

(22) Date de dépôt: **16.12.87**

(51) Int. Cl.⁴: **F 16 H 7/14**

(30) Priorité: **18.12.86 FR 8618309**

(43) Date de publication de la demande:
**29.06.88 Bulletin 88/26**

(84) Etats contractants désignés:
**AT BE CH DE ES GB GR IT LI LU NL SE**

(71) Demandeur: **ROUSSEAU (Société Anonyme)**
**40-44, Avenue Auguste Wissel BP 32**
**F-69250 Neuville-sur-Saône (FR)**

(72) Inventeur: **Rousseau, Claude**
**40-44 Avenue Auguste Wissel**
**F-69250 Neuville-sur-Saone (FR)**

(74) Mandataire: **Schmitt, John**
**Cabinet John Schmitt 9, rue Pizay**
**F-69001 Lyon (FR)**

(54) **Dispositifs de transmission par courroies à tension variable automatiquement.**

(57) Ce dispositif comprend un arbre d'entrée moteur (1) entraînant un arbre de sortie (3) perpendiculaire portant une poulie menante (4) accouplée à une poulie menée (5) par une courroie (6).

Il est caractérisé par le fait que l'ensemble (9) constitué par les organes moteurs (1,3,4) est monté oscillant autour d'un axe (10) disposé parallèlement à l'arbre moteur (1) et situé entre le plan (P) d'action de la courroie (6) et l'arbre moteur (1) à une distance (L) dudit plan choisie en fonction de la tension à obtenir sur la courroie, ajustée à la puissance instantanée à transmettre, de manière que ladite tension de courroie soit variable, automatique et proportionnelle au couple transmis (C).

Fig.1

EP 0 272 995 A1

Bundesdruckerei Berlin

## Description

"DISPOSITIF DE TRANSMISSION PAR COURROIES A TENSION VARIABLE AUTOMATIQUEMENT."

La présente invention se rapporte aux dispositifs de transmission de puissance mécanique et notamment ceux du genre à courroies accouplant des poulies dans le but de transmettre la rotation d'un premier arbre moteur à un second arbre mené par exemple.

Pour que ces dispositifs de transmission fonctionnent correctement, on doit constamment régler la tension de la courroie. A cet effet, on utilise généralement des tendeurs mécaniques qui agissent directement sur la courroie et la forcent à s'appliquer contre les poulies.

Ces tendeurs ne donnent pas entière satisfaction parce qu ils fatiguent les courroies. Par ailleurs, n'agissant que sur le brin conduit de la courroie, ces tendeurs n'empêchent pas tout glissement.

Le dispositif objet de la présente invention permet de pallier ces inconvénients.

Il s'agit d'un dispositif de transmission de puissance mécanique à tension de courroies variable, automatique et proportionnelle au couple transmis.

Dans un dispositif comprenant un arbre d'entrée moteur, entraînant un arbre de sortie perpendiculaire et qui porte une poulie menante accouplée à une poulie menée par une courroie, la caractéristique de l'invention réside dans le fait que l'ensemble moteur est monté oscillant autour d'un axe disposé parallèlement à l'arbre moteur et au plan de déplacement de la courroie, à une distance dudit plan choisie en fonction de la tension à obtenir sur la courroie et ajustée à la puissance instantanée à transmettre.

Les détails de ce dispositif seront mieux compris par la description qui va suivre se référant aux schémas annexés qui montrent le principe de l'invention.

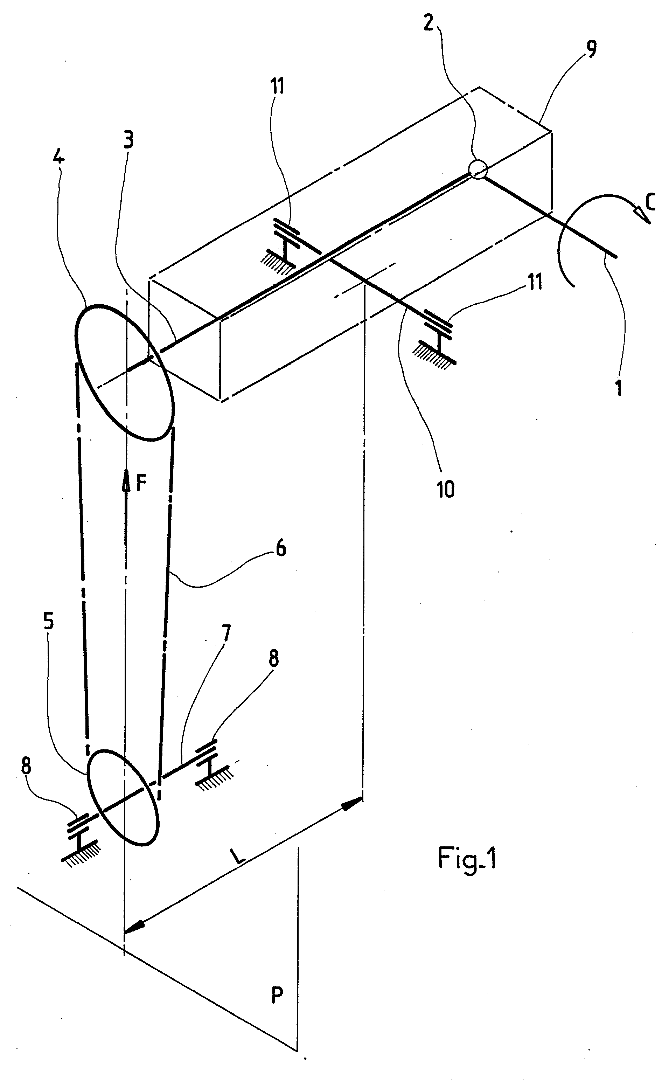

Les figures 1, 2 et 3 représentent trois exemples schématiques de réalisation de l'invention.

Comme l'illustre le schéma, le dispositif comporte un arbre d'entrée moteur 1, entraînant par tout moyen approprié 2, un arbre de sortie 3 auquel est rendue solidaire une poulie 4.

La poulie motrice 4 est accouplée à une poulie receptrice 5 au moyen d'une courroie 6, la poulie étant fixée à un arbre 7 porté par des paliers 8.

L'ensemble schématisé par le repère 9 et comprenant les organes moteurs 1, 3 et 4, est monté oscillant sur un axe 10 supporté par des paliers 11.

La courroie de transmission 6 fonctionne dans un plan P perpendiculaire à l'arbre de sortie 3 et distant de l'axe 10 d'une longueur L.

Sur le schéma de la figure 1 , l'axe d'oscillation 10 de l'ensemble 9 est situé entre l'arbre d'entrée 1 et le plan P d'action de la courroie 6.

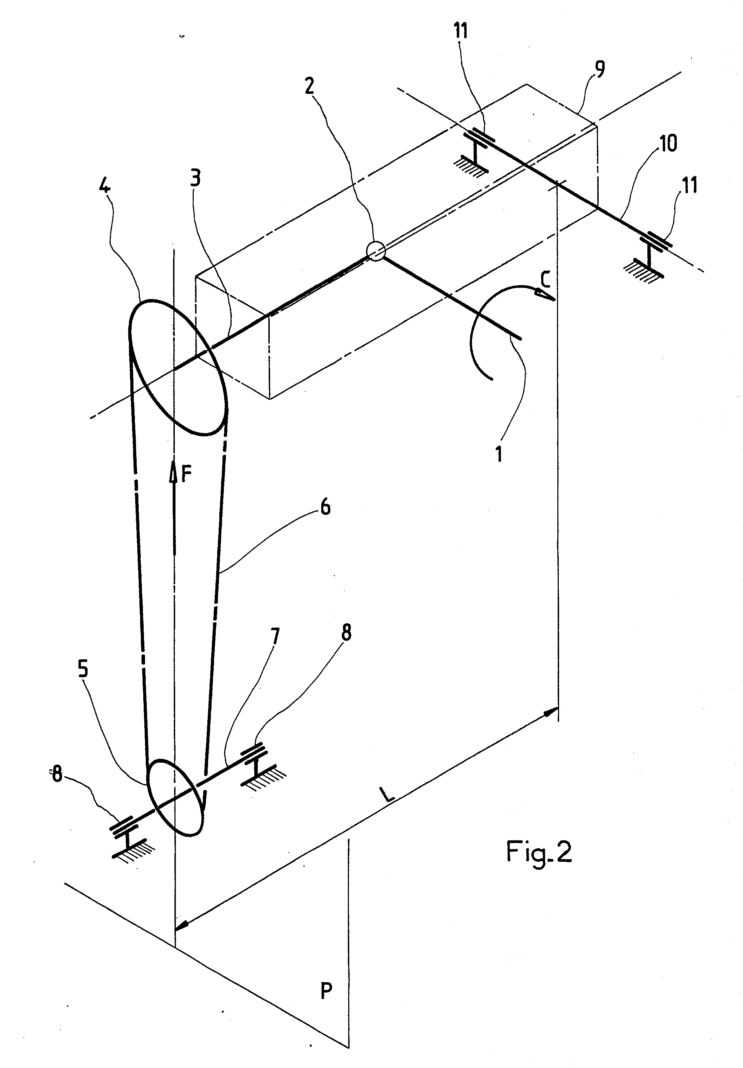

Sur le schéma de la figure 2, c'est l'arbre moteur 1 qui est placé entre l'axe d'oscillation 10 de l'ensemble 9 et le plan d'action P de la courroie 6.

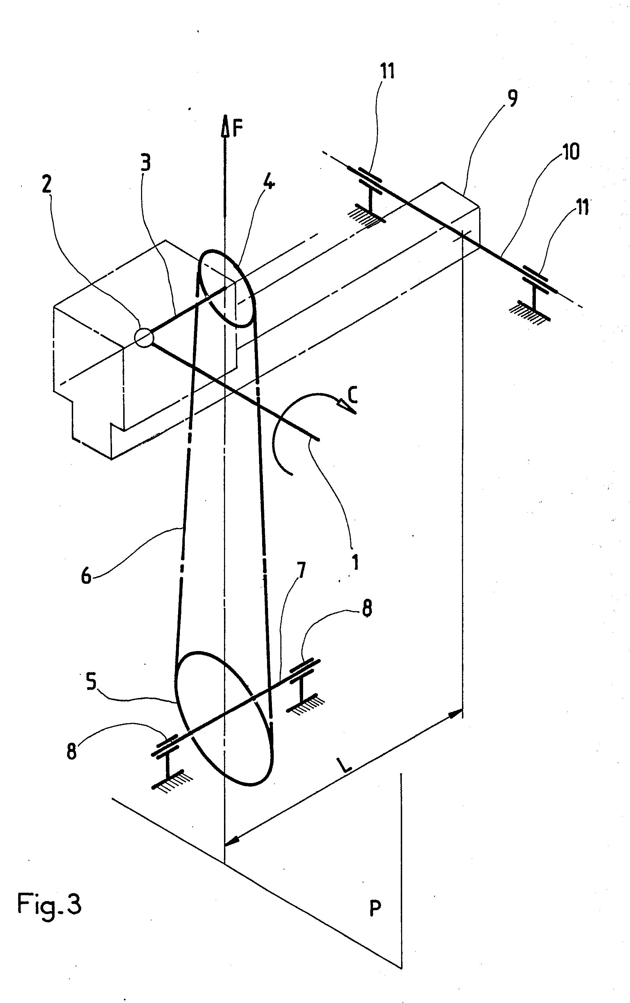

Sur le schéma de la figure 3, c'est le plan d'action P de la courroie 6 qui est situé entre l'arbre moteur 1 et l'axe d'oscillation 10 de l'ensemble 9.

Le fonctionnement de ce dispositif a lieu de la façon suivante :

Sur l'arbre moteur d'entrée 1 s'exerce un couple C et une vitesse de rotation V.

Sur l'arbre de sortie 3 s'exerce un couple C' et une vitesse de rotation V' et une force F perpendiculaire aux arbres 1 et 3 dans le plan P.

La force F est liée au couple C par la formule :

$$F = \frac{C}{L}$$

L doit être choisie pour que F s'ajuste à la tension à obtenir sur la courroie 6 en fonction de la puissance instantanée à transmettre.

## Revendications

1 - Dispositif de transmission de puissance mécanique à courroies comprenant un arbre d'entrée moteur (1) entrainant un arbre de sortie (3) perpendiculaire portant une poulie menante (4) accouplée à une poulie menée (5) par une courroie (6), caractérisé par le fait que l'ensemble (9) constitué par les organes moteurs (1,3,4) est monté oscillant autour d'un axe (10) disposé parallèlement à l'arbre moteur (1) et au plan (P) d'action de la courroie (6) à une distance (L) dudit plan choisie en fonction de la tension à obtenir sur la courroie, ajustée à la puissance instantanée à transmettre, de manière que ladite tension de courroie soit variable, automatique et proportionnelle au couple transmis.

2 - Dispositif suivant la revendication 1, caractérisé par le fait que 1 axe d'oscillation (10) est situé entre l'arbre moteur (1) et le plan (P) d'action de la courroie (6).

3 - Dispositif suivant la revendication 1, caractérisé par le fait que 1 arbre moteur (1) est situé entre l'axe d'oscillation (10) et le plan d'action (P) de la courroie (6).

4 - Dispositif suivant la revendication 1, caractérisé par le fait que le plan d action (P) de la courroie est situé entre l'arbre moteur (1) et l'axe d oscillation (10).

0272995

Fig.1

0272995

Fig. 2

0272995

Fig.3

Office européen
des brevets

**RAPPORT DE RECHERCHE EUROPEENNE**

Numero de la demande

EP  87 42 0343

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|-----------|-------------------------------------------------------------------------------|------------------------|---------------------------------------|
| A | GB-A- 666 984  (POESCHL)<br>* En entier *<br>--- | 1-4 | F 16 H   7/14 |
| A | FR-A-1 228 908  (BOUCHER)<br>* En entier *<br>--- | 1-4 | |
| A | WO-A-8 601 572  (DELTA AG)<br>----- | | |

**DOMAINES TECHNIQUES RECHERCHES (Int. Cl.4)**

F 16 H   7/00
F 16 H  13/00

Le présent rapport a été établi pour toutes les revendications

| Lieu de la recherche | Date d'achèvement de la recherche | Examinateur |
|----------------------|-----------------------------------|-------------|
| LA HAYE | 29-02-1988 | FLORES E. |